(19) Europäisches Patentamt
European Patent Office
Office européen des brevets

(11) **EP 3 715 978 A1**

(12) **EUROPÄISCHE PATENTANMELDUNG**

(43) Veröffentlichungstag:
**30.09.2020   Patentblatt 2020/40**

(51) Int Cl.:
***G05B 19/404*** (2006.01)

(21) Anmeldenummer: **19165248.6**

(22) Anmeldetag: **26.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Regulin, Daniel**
**81825 München (DE)**

(54) **VERFAHREN ZUM BETREIBEN EINER WERKZEUGMASCHINE SOWIE WERKZEUGMASCHINE**

(57)     Die Erfindung betrifft ein Verfahren zum Betreiben einer Werkzeugmaschine (12), mit den Schritten:
- während eines Bearbeitungsprozesses, bei welchem mittels der Werkzeugmaschine wenigstens (12) ein erstes Werkstück einer ersten Charge bearbeitet wird: Erfassen wenigstens einer Messgröße mittels einer Erfassungseinrichtung (16) der Werkzeugmaschine (12; Schritt S1);
- Ermitteln wenigstens eines den Bearbeitungsprozess charakterisierenden Messwerts (32) in Abhängigkeit von der während des Bearbeitungsprozesses erfassten Messgröße mittels einer elektronischen Recheneinrichtung (12; Schritt S2); und
- Vergleichen des ermittelten Messwerts mit wenigstens einer zeitlich vor dem Bearbeitungsprozess anhand wenigstens eines zeitlich vor dem Bearbeitungsprozess mittels der Werkzeugmaschine (10) und/oder mittels einer weiteren Werkzeugmaschine durchgeführten Referenzbearbeitungsprozesses ermittelten und in einer elektronischen Speichereinrichtung (18) gespeicherten Referenzfunktion, welche den zum Bearbeiten wenigstens eines zweiten Werkstücks einer zweiten Charge durchgeführten Referenzbearbeitungsprozess charakterisiert (Schritt S3).

FIG 2

**Beschreibung**

Die Erfindung betrifft ein Verfahren zum Betreiben einer Werkzeugmaschine sowie eine Werkzeugmaschine.

Die WO 2012/153157 A2 offenbart ein Verfahren zum Optimieren von Schneidkräften in einem Fräsprozess zum Bearbeiten eines Werkstücks mittels eines Fräswerkzeugs. Der DE 10 2017 000 471 A1 ist ein numerisches Steuersystem als bekannt zu entnehmen. Außerdem ist aus der DE 10 2006 006 273 A1 ein System zur Ermittlung des Verschleißzustands einer Werkzeugmaschine bekannt.

Aufgabe der vorliegenden Erfindung ist es, ein Verfahren und eine Werkzeugmaschine zu schaffen, sodass mittels der Werkzeugmaschine Werkstücke unterschiedlicher Chargen besonders prozesssicher bearbeitet werden können.

Diese Aufgabe wird erfindungsgemäß durch ein Verfahren mit den Merkmalen des Patentanspruchs 1 sowie durch eine Werkzeugmaschine mit den Merkmalen des Patentanspruchs 12 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben einer Werkzeugmaschine. Die Werkzeugmaschine ist zum Bearbeiten, insbesondere zum mechanischen Bearbeiten, von Werkstücken ausgebildet. Hierzu umfasst die Werkzeugmaschine beispielsweise wenigstens ein Werkzeug und wenigstens einen Antrieb, mittels welchem zum Bearbeiten des jeweiligen Werkstücks wenigstens eine entlang wenigstens einer Achse und/oder um wenigstens eine Achse erfolgende Relativbewegung zwischen dem Werkstück und dem Werkzeug bewirkbar ist, insbesondere während das Werkzeug das Werkstück zumindest vorübergehend berührt. Hierdurch kann das jeweilige Werkstück mittels des Werkzeugs und somit mittels der Werkzeugmaschine, insbesondere mechanisch, bearbeitet werden. Bei dem mittels der Werkzeugmaschine bewirkbaren Bearbeiten handelt es sich beispielsweise um ein spanendes Bearbeiten, insbesondere um ein Drehen oder ein Fräsen. Bei einem ersten Schritt des Verfahrens wird während eines Bearbeitungsprozesses, bei beziehungsweise während welchem mittels der Werkzeugmaschine wenigstens ein erstes Werkstück einer ersten Charge bearbeitet wird, wenigstens eine Messgröße mittels einer Erfassungseinrichtung der Werkzeugmaschine erfasst. Wird beispielsweise während des Bearbeitungsprozesses das erste Werkstück mittels der Werkzeugmaschine spanend bearbeitet und somit zerspant, so ist der Bearbeitungsprozess beispielsweise ein sogenannter Zerspanungsprozess.

Vorzugsweise wird als die Erfassungseinrichtung eine interne Erfassungseinrichtung der Werkzeugmaschine, das heißt eine innerhalb der Werkzeugmaschine angeordnete und ohnehin zur Werkzeugmaschine gehörende Erfassungseinrichtung genutzt, deren Messsignal oder Messsignale beispielsweise verwendet wird beziehungsweise werden, um die Werkzeugmaschine während des Bearbeitungsprozesses zu betreiben, insbesondere zu steuern oder zu regeln. Hierbei wird beispielsweise die Messgröße durch das Messsignal beziehungsweise durch die Messsignale charakterisiert. Das jeweilige Messsignal ist beispielsweise ein elektrisches Signal. Somit ist es vorzugsweise vorgesehen, dass die Messgröße nicht etwa durch zusätzliche, externe Sensoren erfasst beziehungsweise gemessen wird, sondern die Messgröße wird mittels der ohnehin vorgesehenen, internen und auch als Messeinrichtung bezeichneten Erfassungseinrichtung der Werkzeugmaschine erfasst und somit gemessen.

Bei einem zweiten Schritt des Verfahrens wird mittels einer elektronischen Recheneinrichtung, insbesondere der Werkzeugmaschine, wenigstens ein den Bearbeitungsprozess charakterisierender Messwert in Abhängigkeit von der während des Bearbeitungsprozesses erfassten Messgröße ermittelt. Der Bearbeitungsprozess, während welchem die Messgröße erfasst wird, wird auch als aktueller Bearbeitungsprozess bezeichnet, da während des aktuellen Bearbeitungsprozesses zumindest ein Teil des Verfahrens durchgeführt und dabei die Messgröße mittels der Erfassungseinrichtung erfasst wird. Insbesondere kann vorgesehen sein, dass der wenigstens eine Messwert während des Bearbeitungsprozesses, das heißt während des aktuellen Bearbeitungsprozesses, mittels der elektronischen Recheneinrichtung ermittelt, insbesondere berechnet, wird.

Bei einem dritten Schritt des Verfahrens wird der ermittelte Messwert, insbesondere mittels der elektronischen Recheneinrichtung und/oder während des Bearbeitungsprozesses beziehungsweise während des aktuellen Bearbeitungsprozesses, mit wenigstens einer zeitlich vor dem Bearbeitungsprozess anhand wenigstens eines zeitlich vor dem Bearbeitungsprozess mittels der Werkzeugmaschine und/oder mittels einer weiteren Werkzeugmaschine durchgeführten Referenzbearbeitungsprozesses ermittelten und in einer elektronischen Speichereinrichtung, insbesondere der Werkzeugmaschine beziehungsweise der elektronischen Recheneinrichtung, gespeicherten, vorzugsweise, mehrdimensionalen Referenzfunktion verglichen, welche den zum Bearbeiten wenigstens eines zweiten Werkstücks einer zweiten Charge durchgeführten Referenzbearbeitungsprozess charakterisiert. Hierzu wird beispielsweise die Referenzfunktion aus der Speichereinrichtung abgerufen. Die Speichereinrichtung kann Bestandteil der Werkzeugmaschine und/oder Bestandteile einer Steuerung zum Betreiben, insbesondere Steuern oder Regeln der Werkzeugmaschine sein, oder die Speichereinrichtung ist eine bezüglich der Werkzeugmaschine und/oder bezüglich der Steuerung externe Speichereinrichtung wie beispielsweise eine auch als Datenwolke oder Cloud bezeichnete Daten-Cloud. Mit andere Worten kann die Referenzfunktion lokal auf oder in der auch als Maschinensteuerung bezeichneten Steuerung beziehungsweise auf oder in einem oder mehreren. Peripheriegeräten der Maschinensteuerung und/oder, insbesondere zentral, in einer Datenwolke Cloud gespeichert sein beziehungsweise werden.

Vorzugsweise ist die Referenzfunktion eine mehrdimensionale Funktion, das heißt eine mehrdimensionale Referenzfunktion. Ferner ist es denkbar, dass die Referenzfunktion eine eindimensionale Funktion, das heißt eine eindimensionale Referenzfunktion ist.

Mit anderen Worten, die Referenzfunktion charakterisiert oder beschreibt den Referenzbearbeitungsprozess, welcher zeitlich vor dem aktuellen Bearbeitungsprozess mittels der Werkzeugmaschine und/oder mittels einer weiteren, zusätzlich zu der Werkzeugmaschine vorgesehenen Werkzeugmaschine durchgeführt wurde beziehungsweise wird, wobei bei dem Referenzbearbeitungsprozess beziehungsweise während des Referenzbearbeitungsprozesses das zweite Werkstück mittels der Werkzeugmaschine beziehungsweise mittels der weiteren Werkzeugmaschine, insbesondere mechanisch und vorzugsweise spanend, bearbeitet wurde beziehungsweise wird. Insbesondere kann vorgesehen sein, dass das zur zweiten Charge gehörende zweite Werkstück bei dem Referenzbearbeitungsprozess mittels desselben Werkzeugs bearbeitet wurde beziehungsweise wird, mittels welchem auch das zur ersten Charge gehörende erste Werkstück bei dem aktuellen Bearbeitungsprozess bearbeitet wird.

Beispielsweise können anhand des Referenzbearbeitungsprozess Referenzwerte gewonnen beziehungsweise ermittelt werden, welche dadurch, dass der Referenzbearbeitungsprozess mittels der Werkzeugmaschine und/oder mittels der weiteren Werkzeugmaschine durchgeführt wurde, die Referenzwerte mittels der Werkzeugmaschine und/oder mittels der weiteren Werkzeugmaschine ermittelt werden können. Vorzugsweise wird dabei lediglich ein Einfluss von maschinenspezifischen Faktoren kompensiert, zum Beispiel durch ein Maschinenmodell und/oder durch Messung der spezifischen Faktoren. Ein Beispiel hierfür ist der elektrische Strom beziehungsweise ein einfach auch als Moment bezeichnetes Drehmoment einer Achse, welches ohne Eingriff des Werkzeugs aufgewendet werden muss, zum Beispiel wegen Reibung.

Unter dem Vergleichen des Messwerts mit der Referenzfunktion kann insbesondere verstanden werden, dass der Messwert in Bezug zu der Referenzfunktion gesetzt und/oder mit der Referenzfunktion verknüpft und/oder in ein Verhältnis zur Referenzfunktion gesetzt wird. Alternativ oder zusätzlich kann unter dem Vergleichen des Messwerts mit der Referenzfunktion verstanden werden, dass ein etwaiger Unterschied beziehungsweise eine etwaige Differenz zwischen dem Messwert und der Referenzfunktion, insbesondere zwischen dem Messwert und wenigstens einem Funktionswert der Referenzfunktion, visualisiert und dabei beispielsweise auf einer elektronischen Anzeige angezeigt und/oder, insbesondere mittels der elektronischen Recheneinrichtung, ermittelt beziehungsweise berechnet wird. Alternativ oder zusätzlich kann unter dem Vergleichen des Messwerts mit der Referenzfunktion verstanden werden, dass sowohl die Referenzfunktion als auch der Messwert verwendet werden, um in Abhängigkeit von dem Messwert und der Referenzfunktion wenigstens einen Berechnungs- oder Ermittlungsvorgang durchzuführen, um dadurch beispielsweise wenigstens einen Berechnungswert und/oder wenigstens eine Berechnungsfunktion zu ermitteln, insbesondere zu berechnen.

Der Referenzbearbeitungsprozess ist ein mittels der Werkzeugmaschine beziehungsweise mittels der weiteren Werkzeugmaschine durchgeführter Bearbeitungsprozess, welcher zeitlich vor dem aktuellen Bearbeitungsprozess durchgeführt wird beziehungsweise wurde und insbesondere zur begrifflichen Unterscheidung von dem aktuellen Bearbeitungsprozess als Referenzbearbeitungsprozess bezeichnet wird. Um den Bearbeitungsprozess, während welchem die Messgröße bei dem ersten Schritt erfasst wird, begrifflich von dem Referenzbearbeitungsprozess unterscheiden zu können, wird der Bearbeitungsprozess, während welchem die Messgröße erfasst wird, auch als aktueller Bearbeitungsprozess oder erster Bearbeitungsprozess bezeichnet.

Das erfindungsgemäße Verfahren ermöglicht es, die Werkzeugmaschine, insbesondere deren Betrieb, besonders frühzeitig an das erste Werkstück beziehungsweise an die erste Charge anpassen zu können, und zwar auf Basis von Erkenntnissen, die anhand des Referenzbearbeitungsprozesses und somit anhand eines mittels einer der Werkzeugmaschine beziehungsweise mittels der weiteren Werkzeugmaschine durchgeführten Bearbeitens des zweiten Werkstücks beziehungsweise der zweiten Charge gewonnen wurden. Die genannten Erkenntnisse werden dabei durch die genannte Referenzfunktion wiedergespiegelt, abgebildet beziehungsweise beschrieben. Mit anderen Worten ermöglicht es das erfindungsgemäße Verfahren, die Werkzeugmaschine, insbesondere deren Betrieb, besonders frühzeitig an das erste Werkstück beziehungsweise an die erste Charge anpassen zu können, und zwar auf Basis des durch die Referenzfunktion charakterisierten Referenzbearbeitungsprozesses und somit auf Basis der zweiten Charge, welche zumindest teilweise vor Durchführen des aktuellen Bearbeitungsprozesses mittels der Werkzeugmaschine beziehungsweise mittels der weiteren Werkzeugmaschine bearbeitet wurde beziehungsweise wird. Unter dem Merkmal, dass die zweite Charge im Rahmen des Referenzbearbeitungsprozesses mittels der Werkzeugmaschine beziehungsweise mittels der weiteren Werkzeugmaschine zumindest teilweise bearbeitet wird beziehungsweise wurde, ist insbesondere zu verstehen, dass mittels der Werkzeugmaschine beziehungsweise mittels der weiteren Werkzeugmaschine zeitlich vor Durchführen des aktuellen Bearbeitungsprozesses zumindest das zweite Werkstück der zweiten Charge bearbeitet wird beziehungsweise wurde.

Insbesondere ist es durch Verglichen des Messwerts mit der Referenzfunktion möglich, etwaige Unterschiede zwischen dem aktuellen Bearbeitungsprozess und dem Referenzbearbeitungsprozess und somit etwaige Unterschiede zwischen den Werkstücken beziehungsweise zwischen den Chargen besonders frühzeitig zu erkennen, sodass dann die Werkzeugmaschine, insbesondere Prozessparameter zum Betreiben, insbesondere zum Steuern oder Regeln, der Werkzeugmaschine, besonders frühzeitig an diese etwaigen Unterschiede anzupassen.

Der Erfindung liegen insbesondere die folgenden Erkenntnisse zugrunde: Programme, insbesondere Steuerungs- oder Regelungsprogramme, von Werkzeugmaschinen beziehungsweise zum Betreiben, insbesondere zum Steuern oder Regeln, von Werkzeugmaschinen sind üblicherweise in einer modernen Fertigung hinsichtlich Werkzeugstandzeit, Bearbeitungsdauer und Bauteilqualität optimiert. Eine Bearbeitbarkeit, insbesondere eine Zerspanbarkeit, von spezifizierten Materialien jedoch unterliegt zum Teil erheblichen Schwankungen, welche in Abhängigkeit von jeweiligen Chargen für unterschiedliche Werkzeugstandzeiten sorgen kann. Ohne eine vorhergehende Analyse von Werkstoffen können diese auch als Variationen bezeichnete Schwankungen derzeit nicht berücksichtigt werden oder führen zu einem Fehlerfall beziehungsweise zu einem Schaden an der Werkzeugmaschine und dem zu bearbeitenden Werkstück. Die Erfindung ermöglicht es nun, eine Charge, wie beispielsweise die erste Charge und die zweite Charge insbesondere hinsichtlich ihrer Charakteristik, insbesondere automatisch, zu analysieren, sodass in der Folge eine besonders vorteilhafte und optimierte Verarbeitung von Werkstücken und eine Minimierung von Störungen realisiert werden können. Die jeweilige Charge wird auch als Materialcharge bezeichnet. Mit anderen Worten liegen der Erfindung insbesondere die Erkenntnisse zugrunde, dass sich Chargen und somit jeweilige Werkstücke der jeweiligen Chargen hinsichtlich ihrer Bearbeitbarkeit deutlich voneinander unterscheiden können, obwohl jedoch nominell die gleiche Zusammensetzung, insbesondere Werkstoffzusammensetzung, der Werkstücke der Chargen vorliegt. Beispielsweise kann sich die Bearbeitbarkeit, insbesondere Zerspanbarkeit, des ersten Werkstücks von der Bearbeitbarkeit, insbesondere Zerspanbarkeit, des zweiten Werkstücks dadurch unterscheiden, dass die Werkstücke, obwohl sie aus dem gleichen Werkstoff gebildet sind und somit die gleiche Werkstoffzusammensetzung aufweisen, auf unterschiedliche Weise wärmebehandelt wurden. Während sich die Chargen voneinander unterscheiden können, insbesondere im Hinblick auf ihre Bearbeitbarkeit, sind die jeweiligen Werkstücke der jeweiligen Charge untereinander sehr ähnlich oder gleich, insbesondere im Hinblick auf ihre Bearbeitbarkeit. Ferner ist es denkbar, dass sich die Werkstücke derselben Charge voneinander unterscheiden können, insbesondere hinsichtlich der Form. Nur das Verfahren der Bearbeitung sollte sich hinsichtlich der Referenzfunktion nicht maßgeblich unterscheiden. Diese Abweichung des Prozesses ist erst nach der Aufnahme mehrerer Referenzfunktionen in verschiedenen Arbeitspunkten möglich, wobei durch jede Zerspanung eines Bauteils beziehungsweise eines Werkstücks eine neue Referenzfunktion entstehen kann.

Das erfindungsgemäße Verfahren ermöglicht es nun, solche, etwaige Unterschiede zwischen den Werkstücken und somit zwischen den Chargen, insbesondere automatisch, anhand des Messwerts und anhand der Referenzfunktion besonders frühzeitig zu erkennen. In der Folge können beispielsweise die den Betrieb und somit den Bearbeitungsprozess beziehungsweise mittels der Werkzeugmaschine durchzuführende Bearbeitungsprozesse beeinflussende Prozessparameter in Abhängigkeit von dem Vergleich eingestellt und insbesondere an die etwaigen Unterschiede zwischen den Chargen angepasst werden, sodass insbesondere die Werkstücke der ersten Charge prozesssicher und somit zeit- und kostengünstig und/oder besonders schonend für die Werkzeugmaschine bearbeitet, insbesondere zerspant, werden können.

Herkömmlicherweise werden etwaige Unterschiede zwischen zwei Chargen dadurch berücksichtigt beziehungsweise werden unerwünschte Effekte, welche aus etwaigen Unterschieden zwischen zwei Chargen resultieren können, dadurch vermieden, dass beispielsweise nach Bearbeiten einer Charge ein vorsichtiges Einfahren einer weiteren, neuen beziehungsweise anderen Charge im Rahmen eines Produktionsprozesses durchgeführt wird. Dabei beeinflusst eine die Werkzeugmaschine bedienende Person die Prozessparameter manuell auf Basis von Prozessobservation und ihrer Erfahrung. Ferner ist es grundsätzlich denkbar, mittels einer zusätzlich zur Werkzeugmaschine vorgesehenen und bezüglich der Werkzeugmaschine externen Sensorik eine Prozessüberwachung beim Bearbeiten der neuen Charge durchzuführen und beispielsweise bei einer Über- beziehungsweise Unterschreitung definierter Grenzwerte eine Warnung auszugeben oder den Prozess zu stoppen. Eine vollumfängliche Voruntersuchung der jeweiligen Charge hinsichtlich ihrer Bearbeitbarkeit, insbesondere Zerspanbarkeit, erfolgt in der Regel aufgrund des hohen Aufwands nicht.

Das erfindungsgemäße Verfahren ermöglicht es nun, etwaige Unterschiede zwischen den Chargen, insbesondere automatisch beziehungsweise automatisiert, zu erkennen und zu berücksichtigen, insbesondere unter Nutzung der internen Erfassungseinrichtung der Werkzeugmaschine. Dadurch, dass der Messwert mittels der Erfassungseinrichtung erfasst und mit der Referenzfunktion verglichen wird, kann ein manuelles Anpassen der Prozessparameter an etwaige Chargenunterschiede vermieden oder effektiv und effizient unterstützt werden, sodass beispielsweise die Werkzeugmaschine zeit- und kostengünstig, das heißt schnell an etwaige Unterschiede zwischen den Chargen angepasst werden kann.

Das Erfassen der Messgröße ist eine Analyse des beispielsweise als ein Zerspanprozess oder Zerspanungsprozess ausgebildeten, aktuellen Bearbeitungsprozesses, wobei durch diese Analyse des aktuellen Bearbeitungsprozesses etwaige, materialchargenspezifische Divergenzen, das heißt etwaige Unterschiede zwischen den Chargen, kompensiert werden können, insbesondere dadurch, dass die Prozessparameter beziehungsweise wenigstens ein einfach auch als Parameter bezeichneter und mittels der Werkzeugmaschine durchzuführende Bearbeitungsprozesse beeinflussender Parameter, insbesondere in Abhängigkeit von dem Vergleich, eingestellt, das heißt verändert beziehungsweise variiert wird. Hierzu werden beispielsweise Messdaten, insbesondere mittels einer Software, an der Werkzeugmaschine aufgezeichnet. Bei diesen Messdaten handelt es sich um maschineninterne Daten, welche beispielsweise von der, insbesondere internen, Erfassungseinrichtung bereitgestellt werden und die erfasste Messgröße charakterisieren. Beispielsweise werden die Daten durch das zuvor genannte Messsignal charakterisiert beziehungsweise umfasst. Externe Sensoren sind somit nicht notwendig und nicht vorgesehen, um die Messgröße zu erfassen.

Bei der Messgröße handelt es sich beispielsweise um ein einfach auch als Moment oder Achsmoment bezeichnetes Drehmoment, welches um eine Achse der Werkzeugmaschine wirkt. Mit anderen Worten kann die Messgröße das zuvor genannte Drehmoment umfassen. Alternativ oder zusätzlich kann die Messgröße ein elektrischer Strom sein oder umfassen, wobei der elektrische Strom beispielsweise durch ein elektrisches oder elektronisches Bauelement der Werkzeugmaschine fließt. Insbesondere kann der elektrische Strom ein elektrischer Motorstrom sein, welcher durch einen Elektromotor der Werkzeugmaschine fließt. Mit anderen Worten wird der Elektromotor mit dem Motorstrom versorgt, um dadurch den Elektromotor zu betreiben. Der Elektromotor ist beispielsweise Bestandteil des zuvor genannten Antriebs, sodass mittels des Elektromotors dadurch, dass der Elektromotor mit dem Motorstrom versorgt wird, die zuvor genannte Relativbewegung zwischen dem Werkzeug und dem Werkstück, insbesondere während des aktuellen Bearbeitungsprozesses, bewirkbar ist beziehungsweise bewirkt wird. Alternativ oder zusätzlich kann die Messgröße eine Abweichung, insbesondere eine Regelabweichung, von wenigstens zwei Achsen der Werkzeugmaschine umfassen oder sein. Bei einer der wenigstens zwei Achsen kann es sich um eine Vorschubachse handeln, entlang welcher beispielsweise das Werkstück und das Werkzeug translatorisch relativ zueinander bewegt werden. Bei einer zweiten der wenigstens zwei Achsen kann es sich um eine Spindel oder Spindelachse handeln, um welche beispielsweise das Werkzeug und das Werkstück relativ zueinander gedreht werden.

Beispielsweise kommt eine Messsoftware zum Einsatz, mittels welcher die Messgröße erfasst wird. Alternativ oder zusätzlich werden mittels der Messsoftware die zuvor genannten Messdaten bereitgestellt, welche die erfasste Messgröße charakterisieren. Dabei hat es sich als besonders vorteilhaft gezeigt, wenn, insbesondere durch die Messsoftware, die Messdaten in Echtzeit zur Verfügung stehen beziehungsweise in Echtzeit zur Verfügung gestellt oder bereitgestellt werden.

Beispielsweise werden die Messdaten beziehungsweise beispielsweise wird die Messgröße und/oder der Messwert in einer elektronischen Speichereinrichtung, insbesondere der Werkzeugmaschine und vorzugsweise elektronischen Recheneinrichtung, gespeichert und somit gepuffert. Hierdurch kann der Messwert beispielsweise verarbeitet, insbesondere mit der Referenzfunktion verglichen, werden, nachdem der Messwert ermittelt beziehungsweise nachdem die Messgröße erfasst wurde.

Als besonders vorteilhaft hat es sich gezeigt, wenn wenigstens ein Parameter, welcher Bearbeitungsprozesse, die mittels der Werkzeugmaschine durchzuführen sind, beeinflusst, in Abhängigkeit von dem Vergleich, insbesondere während des Bearbeitungsprozesses und/oder mittels der elektronischen Recheneinrichtung, eingestellt, das heißt verändert beziehungsweise variiert wird. Bei diesem Parameter kann es sich somit um einen der zuvor genannten Prozessparameter handeln, wobei durch Variation des Parameters der Bearbeitungsprozess beziehungsweise ein jeweiliger, mittels der Werkzeugmaschine durchzuführender Bearbeitungsprozess zum Bearbeiten eines jeweiligen Werkstücks variiert werden kann beziehungsweise variiert wird.

Beispielsweise wird der einfach auch als Parameter bezeichnete Prozessparameter, insbesondere mittels der elektronischen Recheneinrichtung, automatisch in Abhängigkeit von dem Vergleich eingestellt. Ferner ist es denkbar, dass der Parameter in Abhängigkeit von wenigstens einer, insbesondere mittels der Werkzeugmaschine, erfassten und von einer Person bewirkten Eingabe eingestellt wird.

Eine weitere Ausführungsform zeichnet sich dadurch aus, dass, insbesondere während des Bearbeitungsprozesses, der ermittelte Messwert mit wenigstens einer zeitlich vor dem Bearbeitungsprozess anhand wenigstens eines zeitlich vor dem Bearbeitungsprozess mittels der Werkzeugmaschine und/oder mittels der weiteren Werkzeugmaschine durchgeführten zweiten Referenzbearbeitungsprozesses ermittelten und in der elektronischen Speichereinrichtung gespeicherten zweiten, vorzugsweise mehrdimensionalen, Referenzfunktion verglichen wird. Dabei charakterisiert die zweite Referenzfunktion den zum Bearbeiten wenigstens eines dritten Werkstücks einer dritten Chargen durchgeführten zweiten Referenzbearbeitungsprozess. Die vorigen und folgenden Ausführungen zum ersten Referenzbearbeitungsprozess, zur ersten Referenzfunktion, zum zweiten Werkstück und zur zweiten Charge sind ohne weiteres auch auf den zweiten Referenzbearbeitungsprozess, die zweite Referenzfunktion, das dritte Werkstück und die dritte Charge übertragbar und umgekehrt. Beispielsweise wurde oder wird der zweite Referenzbearbeitungsprozess zeitlich vor oder nach dem ersten Referenzbearbeitungsprozess mittels der Werkzeugmaschine und/oder mittels der weiteren Werkzeugmaschine durchgeführt, wobei bei dem zweiten Referenzbearbeitungsprozess beziehungsweise während des zweiten Referenzbearbeitungsprozesses das dritte Werkstück mittels der Werkzeugmaschine und/oder mittels der weiteren Werkzeugmaschine bearbeitet wurde beziehungsweise wird. Insbesondere wurde beziehungsweise wird das dritte Werkstück bei dem zweiten Referenzbearbeitungsprozess mittels desselben Werkzeugs bearbeitet, mittels welchem auch das erste Werkstück bei dem aktuellen Bearbeitungsprozess und/oder das zweite Werkstück bei dem ersten Referenzbearbeitungsprozess bearbeitet wird beziehungsweise wurde.

Des Weiteren können die vorigen und folgenden Ausführungen zu dem Vergleichen des Messwerts mit der ersten Referenzfunktion ohne weiteres auch auf das Vergleichen des Messwerts mit der zweiten Referenzfunktion übertragen werden und umgekehrt. Vorzugsweise weisen die Referenzfunktionen die gleiche Dimension und die gleichen Variablen auf. Wie dabei der jeweilige Name bereits zum Ausdruck bringt, weist die jeweilige, vorzugsweise mehrdimensionale, Referenzfunktion nicht etwa nur eine Variable, sondern mehrere Variablen und somit mehrere veränderliche beziehungsweise mehrere Dimensionen auf. Die jeweiligen Variablen der jeweiligen Referenzfunktion sind dabei beispielsweise die Prozessparameter oder einige beziehungsweise ein Teil der Prozessparameter. Insbesondere beschreibt beziehungsweise definiert die jeweilige Referenzfunktion eine jeweilige gegenseitige Abhängigkeit der Variablen und somit der Prozessparameter.

Durch Berücksichtigung nicht nur der ersten Referenzfunktion sondern auch der zweiten Referenzfunktion steht eine umfangreiche, umfängliche oder auch einfach als Basis bezeichnete Referenzbasis zur Verfügung, anhand derer etwaige Unterschiede zwischen den Chargen besonders frühzeitig erkannt und kompensiert werden können. Insbesondere ist es durch Berücksichtigung der Referenzbasis besonders vorteilhaft möglich, die Werkzeugmaschine besonders präzise an die erste Charge und somit an etwaige Unterschiede zwischen der ersten Charge und der zweiten Charge und/oder zwischen der ersten Charge und der dritten Charge anpassen zu können, sodass die erste Charge beziehungsweise die Werkstücke der ersten Charge mittels der Werkzeugmaschine besonders prozesssicher bearbeitet werden kann beziehungsweise können.

Als besonders vorteilhaft hat es sich gezeigt, dass das beispielsweise während des Bearbeitungsprozesses stattfindende und/oder mittels der elektronischen Recheneinrichtung durchgeführte Vergleichen des Messwerts mit der ersten Referenzfunktion und/oder mit der zweiten Referenzfunktion umfasst, dass mittels der elektronischen Recheneinrichtung eine insbesondere mathematische Kombination, insbesondere eine Linearkombination und vorzugsweise eine Konvexkombination, durchgeführt, das heißt berechnet wird. Mit anderen Worten wird beispielsweise die erste Referenzfunktion mittels der elektronischen Recheneinrichtung mit der zweiten Referenzfunktion durch eine mathematische Kombination, insbesondere durch eine Linearkombination und vorzugsweise durch eine Konvexkombination, kombiniert. Durch diese Kombination wird eine vorzugsweise mehrdimensionale, den Messwert umfassende und den aktuellen Bearbeitungsprozess charakterisierende Ist-Funktion ermittelt, das heißt berechnet beziehungsweise approximiert. Die vorigen und folgenden Ausführungen zur ersten Referenzfunktion und/oder zweiten Referenzfunktion können dabei ohne weiteres auch auf die vorzugsweise mehrdimensionale Ist-Funktion übertragen werden. Dies bedeutet, dass beispielsweise die Ist-Funktion die gleiche Dimension und die gleichen Variablen wie die jeweilige Referenzfunktion aufweist. Die Ist-Funktion wird als Ist-Funktion bezeichnet, da sie den aktuellen Bearbeitungsprozess und somit das mittels der Werkzeugmaschine durchgeführte oder durchzuführende Bearbeiten des ersten Werkstücks charakterisiert, das heißt beschreibt. Insbesondere beschreibt die Ist-Funktion eine gegenseitige Abhängigkeit beziehungsweise ein gegenseitiges Verhältnis der Prozessparameter während des Durchführens des aktuellen Bearbeitungsprozesses, das heißt bei dem oder einem Bearbeiten der ersten Charge beziehungsweise des jeweiligen Werkstücks der ersten Charge.

Eine weitere Ausführungsform zeichnet sich dadurch aus, dass zumindest ein Teil der vorzugsweise mehrdimensionalen Ist-Funktion durch wenigstens einen Funktionsgraph visualisiert wird, indem der Funktionsgraph auf einer elektronischen Anzeige, das heißt auf einem elektronischen Bildschirm, insbesondere der Werkzeugmaschine, angezeigt wird. Vorzugsweise wird auch zumindest ein jeweiliger Teil der jeweiligen Referenzfunktion durch einen jeweiligen Referenz-Funktionsgraph visualisiert, indem der jeweilige Referenz-Funktionsgraph auf der elektronischen Anzeige angezeigt wird. Vorzugweise werden der Funktionsgraph und der Referenz-Funktionsgraph beziehungsweise die Referenz-Funktionsgraphen gleichzeitig auf der elektronischen Anzeige angezeigt. Dadurch kann beispielsweise eine die elektronische Anzeige betrachtende Person den Funktionsgraph und den jeweiligen Referenz-Funktionsgraph optisch wahrnehmen, wodurch die Person etwaige Unterschiede zwischen den Chargen schnell, einfach und nachvollziehbar erkennen kann. Außerdem kann die Person anhand des Funktionsgraphen wenigstens eine sich auf den aktuellen Bearbeitungsprozess und somit die erste Charge beziehende Abhängigkeit zwischen den Prozessparametern erkennen. Insbesondere kann die Person erkennen, inwiefern eine etwaige Änderung eines ersten der Prozessparameter eine etwaige Änderung eines zweiten der Prozessparameter bewirken kann beziehungsweise würde.

Bei einer besonders vorteilhaften Ausführungsform der Erfindung wird mittels der elektronischen Recheneinrichtung wenigstens ein Wert wenigstens eines mittels der Werkzeugmaschine durchzuführende Bearbeitungsprozesse beeinflussenden ersten Parameters beziehungsweise Prozessparameters derart berechnet, dass wenigstens ein zweiter Wert wenigstens eines zweiten Parameters beziehungsweise Prozessparameters, dessen Abhängigkeit von dem ersten Parameter beziehungsweise Prozessparameter durch die Ist-Funktion beschrieben ist, wenigstens ein vorgebbares oder vorgegebenes Kriterium erfüllt. Mit anderen Worten wird bei dieser Ausführungsform ein Optimierungsprozess beziehungsweise eine Optimierungsfunktion, insbesondere mittels der elektronischen Recheneinrichtung, durchgeführt. Im Rahmen der Optimierungsfunktion wird der erste Wert derart ermittelt, dass der zweite Parameter beispielsweise einen gewünschten Parameterwert in Form des zweiten Werts annimmt oder dass der Parameterwert eine vorgegebene oder vorgebbare Grenze unterschreitet oder überschreitet. Auf diese Weise ist es beispielsweise möglich, die Werkzeugmaschine durch Einstellen des ersten Werts derart zu betreiben und in der Folge mittels der Werkzeugmaschine die erste Charge derart zu bearbeiten, dass das jeweilige Werkstück der ersten Charge mittels der Werkzeugmaschine möglichst schnell und/oder möglichst schonend für die Werkzeugmaschine und/oder mit möglichst geringen auftretenden Kräften bearbeitet werden.

Dabei hat es sich als besonders vorteilhaft gezeigt, wenn der wenigstens eine erste Wert des wenigstens einen ersten Parameters mittels der elektronischen Recheneinrichtung automatisch eingestellt wird. Dadurch kann eine besonders prozesssichere sowie zeit- und kostengünstige Bearbeitung gewährleistet werden.

Eine weitere Ausführungsform zeichnet sich dadurch aus, dass der wenigstens eine erste Wert des wenigstens einen ersten Parameters in Abhängigkeit von wenigstens einer erfassten und von einer Person bewirkten Eingabe eingestellt wird. Bei dieser Ausführungsform kann beispielsweise der Person ein ermitteltes Optimierungspotential in Form des ersten Werts präsentiert werden, wobei dann die Person entscheiden kann, ob der erste Wert eingestellt werden soll oder nicht.

Um eine besonders bedarfsgerechte Bearbeitung zu realisieren, ist es in weiterer Ausgestaltung der Erfindung vorgesehen, dass das wenigstens eine Kriterium in Abhängigkeit von wenigstens einer erfassten und von einer Person bewirkten Eingabe eingestellt und dadurch vorgegeben wird. Dies bedeutet, dass die Person, welche beispielsweise die Werkzeugmaschine bedient, das auch als Optimierungskriterium bezeichnete Kriterium einstellt und somit vorgeben kann, sodass der wenigstens eine erste Parameter auf das von der Person vorgegebene Optimierungskriterium hin optimiert wird.

Bei einer besonders vorteilhaften Ausführungsform der Erfindung umfasst das erfindungsgemäße Verfahren den ersten Referenzbearbeitungsprozess und/oder den zweiten Referenzbearbeitungsprozess. Somit ist es vorzugsweise vorgesehen, dass im Rahmen des erfindungsgemäßen Verfahrens zeitlich vor dem aktuellen Bearbeitungsprozess der Referenzbearbeitungsprozess, das heißt der erste und/oder zweite Referenzbearbeitungsprozess, durchgeführt wird, bei welchem insbesondere dann, wenn es sich bei dem Referenzbearbeitungsprozesses um den ersten Referenzbearbeitungsprozesses handelt, das zweite Werkstück mittels der Werkzeugmaschine beziehungsweise mittels der weiteren Werkzeugmaschine bearbeitet wird. Während des Referenzbearbeitungsprozesses wird die wenigstens eine Messgröße mittels der Erfassungseinrichtung der Werkzeugmaschine beziehungsweise der weiteren Werkzeugmaschine erfasst, wobei mittels der elektronischen Recheneinrichtung wenigstens ein den Referenzbearbeitungsprozess charakterisierender Referenzmesswert in Abhängigkeit von der während des Referenzbearbeitungsprozesses erfassten Messgröße ermittelt wird. Außerdem wird in Abhängigkeit von dem Referenzmesswert die Referenzfunktion ermittelt. Insbesondere wird die Referenzfunktion berechnet. In der Folge kann die Werkzeugmaschine an etwaige Unterschiede zwischen den Chargen besonders vorteilhaft eingestellt werden.

Schließlich hat es sich als besonders vorteilhaft gezeigt, wenn die erste Referenzfunktion und/oder die zweite Referenzfunktion und/oder die Ist-Funktion und/oder der Messwert und/oder der Referenzmesswert und/oder der wenigstens eine erste Wert des wenigstens einen ersten Parameters, insbesondere von der elektronischen Recheneinrichtung, bereitgestellt und in eine bezüglich der Werkzeugmaschine externe Datenwolke geladen wird. Aus dieser Datenwolke kann beispielsweise eine bezüglich der Werkzeugmaschine externe, weitere Werkzeugmaschine die jeweilige Referenzfunktion, die Ist-Funktion, den Messwert, den Referenzmesswert und/oder den ersten Wert abrufen beziehungsweise herunterladen. Dadurch können mittels der Werkzeugmaschine ermittelte Daten bei oder an der weiteren Werkzeugmaschine genutzt werden, um mittels der weiteren Werkzeugmaschine Werkstücke besonders prozesssicher bearbeiten, insbesondere zerspanen, zu können. Es können nicht nur Daten in die Datenwolke (Cloud) geladen, sondern auch Daten (Referenzfunktionen) aus der Cloud geladen und für den aktuellen Bearbeitungsprozess angewandt beziehungsweise verwendet werden.

Ein zweiter Aspekt der Erfindung betrifft eine Werkzeugmaschine zum Bearbeiten, insbesondere zum mechanischen Bearbeiten, von Werkstücken, wobei die Werkzeugmaschine zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Wie bereits beschrieben wird der Messwert beispielsweise gespeichert, insbesondere zwischengespeichert, und somit gepuffert. Insbesondere werden mehrere Messgrößen erfasst und/oder es werden mehrere Messwerte der Messgröße ermittelt, sodass vorzugsweise mehrere Messwerte beispielsweise gespeichert und somit gepuffert werden. Dann erfolgt beispielsweise eine Analyse der gepufferten Messwerte anhand eines Modells des beispielsweise als Zerspanungsprozess ausgebildeten Bearbeitungsprozesses, wobei dieses Modell charakteristische Funktionen in Form der Referenzfunktionen für die Materialchargen, was insbesondere für die zweite Charge und die dritte Charge repräsentiert, das heißt umfasst. Insbesondere repräsentiert das Modell die charakteristischen Funktionen unter Berücksichtigung der maßgeblichen Prozessparameter wie beispielsweise Werkzeugverschleiß, Vorschub, Schnittgeschwindigkeit und Schnitttiefe. Dies bedeutet, dass ein erster der Prozessparameter ein Werkzeugverschleiß, das heißt ein Verschleiß des Werkzeugs, ein zweiter der Prozessparameter ein Vorschub, ein dritter der Prozessparameter eine Schnittgeschwindigkeit und ein vierter der Prozessparameter eine Schnitttiefe sein kann. Auch die vorzugsweise mehrdimensionale Ist-Funktion kann eine charakteristische Funktion sein beziehungsweise als eine charakteristische Funktion bezeichnet werden. Die jeweilige charakteristische Funktion wird beispielsweise mit Fc bezeichnet. Ferner wird beispielsweise der Werkzeugverschleiß mit vb, der Vorschub mit f, die Schnittgeschwindigkeit mit vc und die Schnitttiefe mit ap bezeichnet. Da die jeweilige charakteristische Funktion Fc von f, vb, vc und ap hängt, kann die charakteristische Funktion auch beschrieben werden als:

$$\mathrm{Fc}(f,\ ap,\ vc,\ vb).$$

Insbesondere berücksichtigt das Modell das Werkzeug und/oder eine maschinenspezifische Varianz. Unter der maschinenspezifischen Varianz ist zu verstehen, dass die Messgröße und somit der Messwert nicht nur durch eine Interaktion zwischen dem Werkstück und der Werkzeugmaschine beziehungsweise dem Werkzeug beeinflusst wird, sondern die Messgröße und somit der Messwert werden auch durch die Werkzeugmaschine selbst, das heißt durch maschineninhärente Faktoren wie beispielsweise eine innere Reibung der Werkzeugmaschine beeinflusst. Durch die Berücksichtigung der maschinenspezifischen Varianz kann der jeweilige maschineninhärente Faktor beispielsweise von der Messgröße beziehungsweise von dem Messwert abgezogen werden, sodass der Messwert sowie beispielsweise die Ist-Funktion das erste Werkstück und somit die erste Charge besonders präzise charakterisiert.

Da beispielsweise anhand von mehreren Materialchargen jeweilige Referenzfunktionen gewonnen werden, bilden diese mehreren Referenzfunktionen eine resultierende Funktionenschar, welche einen definierten Arbeitsbereich des fokussierten Prozesses abdeckt. Dieser ist üblicherweise durch die zugelassenen Schnittparameter des Werkzeugs gegeben. Auf Basis des Modells können zum einen vor dem Prozess anhand der sich durch den Werkzeugverschleiß ändernden Schnittbedingungen schon vor dem Prozess optimierte Schnittparameter und deren zeitliche Adaption definiert werden. Zum anderen kann durch die gepufferten Messwerte schon sehr früh im Prozess und beispielsweise bei einem Beginn einer Bearbeitung eines neuen Werkstücks abgeschätzt werden, welche Materialcharge vorliegt. Auf dieser Basis erfolgt beispielsweise eine Analyse der Messdaten durch die Bildung der Konvexkombination, insbesondere zur Interpolation der charakteristischen Funktion einer vorliegenden Materialcharge beziehungsweise der ersten Charge. Die Ergebnisse, die zu erwartenden Kräfte bei Fortlaufender Bearbeitung beziehungsweise Zerspanung sowie eine Abschätzung des Werkzeugverschleißes können einer die Werkzeugmaschine bedienenden Person, welche auch als Bediener bezeichnet wird, visualisiert werden, um beispielsweise über die Materialcharge, insbesondere über deren Materialchargenverhalten, zu informieren und gegebenenfalls Anpassungen für den Prozess zu treffen. Eine Unterstützung hierfür bietet die Optimierungsfunktion, die eine vorteilhafte beziehungsweise optimale Kombination der adaptierbaren Prozessparameter ermittelt und somit beispielsweise die Kräfte bei der Bearbeitung für möglichst geringen Werkzeugverschleiß minimiert beziehungsweise besonders gering hält. Somit kann beispielsweise das Kriterium umfassen, dass bei dem jeweiligen Bearbeitungsprozess auftretende Kräfte einen vorgebbaren oder vorgegebenen Schwellenwert unterschreiten und somit beispielsweise möglichst gering sind. Dabei erfolgt beispielsweise die Übernahme der optimierten Prozessparameter manuell durch den Bediener oder automatisch durch eine Synchronisation, insbesondere in einem Steuerungsprogramm zum Betreiben, insbesondere zum Regeln oder Steuern, der Werkzeugmaschine. Eine Wahl der variierbaren beziehungsweise adaptierbaren Prozessparameter für die Optimierung kann konfigurierbar und somit an prozessvorgaben adaptierbar sein. Neben der Darstellung an der Werkzeugmaschine ist eine maschinenübergreifende Analysemöglichkeit vorteilhaft, insbesondere durch Hochladen beziehungsweise Laden in die zuvor genannte und auch als Datencloud bezeichnete Datenwolke. Weiterführende Algorithmen sowie eine Beurteilung von Lieferanten nach Bearbeitbarkeit, insbesondere Zerspanbarkeit der Chargen sind auf dieser Basis vorteilhaft möglich.

Im Vergleich zu herkömmlichen Verfahren kann durch die Erfindung zum einen die Prozesssicherheit durch die Adaption der Prozessparameter an die vorliegende Charge erhöht werden, zum anderen führt die Kompensation zu einem geringeren Aufwand beim Einfahren einer neuen Materialcharge und kann Kosten für die Optimierung von Programmen hinsichtlich Werkzeugstandzeit sparen. Die automatische Adaption der Prozessparameter reduziert zudem die Nutzereingriffe und spart somit Zeit des Bedieners. Die Nutzung maschineninterner Signale beispielsweise in Form der Messgröße ist ein vorteilhafter Aspekt, um sowohl Kosten für eine zusätzliche Sensorik einzusparen als auch Einschränkungen an der Werkzeugmaschine durch zusätzliche Installationen zu vermeiden. Zur Bildung beziehungsweise Bestimmung oder Durchführung der Kombination, insbesondere der Linearkombination und vorzugsweise der Konvexkombination, wird ein Algorithmus verwendet, wobei durch die Kombination die Ist-Funktion und somit eine Bearbeitbarkeit beziehungsweise ein Bearbeitungsverhalten der ersten Charge approximiert. Der Algorithmus zur Bestimmung der Konvexkombination greift beispielsweise auf diese Daten zu und prognostiziert die Chargen-Charakteristik. Dabei wird das maschinenspezifische Referenzverhalten durch das statistische Modell beziehungsweise durch die Funktionscharge und somit durch die jeweilige Funktion Fc repräsentiert. Ein vorteilhafter Aspekt ist zudem eine Durchgängigkeit der erfindungsgemäßen Lösung, da die Erfindung sowohl an der Werkzeugmaschine selbst wirken als auch bei anderen, weiteren Werkzeugmaschinen insbesondere über die Datenwolke genutzt werden kann. Dadurch sind globale Analysen möglich. Durch die Visualisierung kann zudem eine vorteilhafte visualisierte Herstellung dargestellt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in den jeweils angegebenen Kombinationen, sondern auch in anderen Kombinationen oder in Alleinstellung verwendbar, ohne den Rahmen der Erfindung zu verlassen.

Die Zeichnung zeigt in:

FIG 1  ein Schaubild zur Veranschaulichung eines erfindungsgemäßen Verfahrens und einer erfindungsgemäßen Werkzeugmaschine;

FIG 2  ein Flussdiagramm zum Veranschaulichen des erfindungsgemäßen Verfahrens;

FIG 3  Graphen zur Veranschaulichung von mehrdimensionalen Funktionen;

FIG 4  weitere Graphen zur Veranschaulichung von mehrdimensionalen Funktionen;

FIG 5  weitere Graphen zur Veranschaulichung von mehrdimensionalen Funktionen; und

FIG 6  Blockdiagramme zur weiteren Veranschaulichung des Verfahrens.

In den Figuren sind gleiche oder funktionsgleiche Elemente mit gleichen Bezugszeichen versehen.

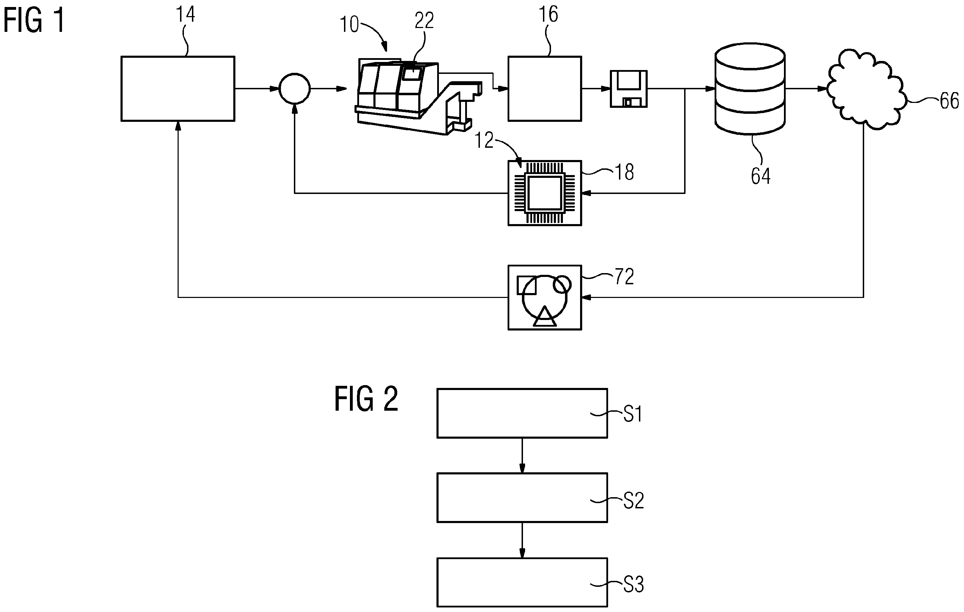

Im Folgenden wir anhand von FIG 1 ein Verfahren zum Betreiben einer in FIG 1 besonders schematisch dargestellten Werkzeugmaschine 10 beschreiben, wobei die Werkzeugmaschine 10 zum Durchführen des Verfahrens ausgebildet ist. Mittels der Werkzeugmaschine 10 können Werkstücke bearbeitet, insbesondere mechanisch und vorzugsweise spanend bearbeitet, werden, sodass mittels der Werkzeugmaschine 10 der Bearbeitungsprozess in Form von Zerspanungsprozessen durchgeführt werden können. Hierzu umfasst die Werkzeugmaschine 10 ein in den FIG nicht erkennbares Werkzeug und einen Antrieb, mittels welchem bei dem jeweiligen Bearbeitungsprozess Relativbewegungen zwischen dem jeweiligen, zu bearbeitenden Werkstück und dem Werkzeug bewirkt werden, insbesondere während das Werkzeug das Werkstück zumindest vorübergehend berührt. Hierdurch wird das Werkstück mittels des Werkzeugs und somit mittels der Werkzeugmaschine 10 bearbeitet. Bei dem jeweiligen Bearbeitungsprozess wird die Werkzeugmaschine 10 beispielsweise mittels einer elektronischen Recheneinrichtung betrieben, insbesondere gesteuert oder geregelt, wobei die elektronische Recheneinrichtung hierzu ein Programm, insbesondere ein numerisches Programm und dabei beispielsweise ein Regelungs- oder Steuerungsprogramm, ausführt. Die elektronische Recheneinrichtung kann Bestandteil der Werkzeugmaschine 10 sein, ist in FIG 1 besonders schematisch dargestellt und dort mit 12 bezeichnet. Die Recheneinrichtung 12 stellt beispielsweise Ansteuersignale bereit, mittels welchen der Antrieb angesteuert und dadurch betrieben, insbesondere gesteuert oder geregelt, wird.

Der Werkzeugmaschine 10 werden dabei beispielsweise Konstruktionsdaten 14 zugeführt, sodass die Werkzeugmaschine 10 in Abhängigkeit von zugeführten Konstruktionsdaten betrieben wird. Auf Basis der Konstruktionsdaten, welche beispielsweise von einer Konstruktionssoftware stammen oder bereitgestellt werden, wird das jeweilige Werkstück bearbeitet, um dadurch aus dem jeweiligen Werkstück ein beispielsweise durch die Konstruktionsdaten beschriebenes oder definierte Bauelement herzustellen.

FIG 2 zeigt ein Flussdiagramm zum weiteren Veranschaulichen des Verfahrens. Bei dem ersten Schritt S1 des Verfahrens wird während eines Bearbeitungsprozesses, bei beziehungsweise während welchem mittels der Werkzeugmaschine 10 wenigstens ein erstes Werkstück einer ersten Charge, welche auch als erste Materialcharge bezeichnet wird, bearbeitet wird, wenigstens eine Messgröße mittels einer internen Erfassungseinrichtung der Werkzeugmaschine 10 erfasst. Diese interne Erfassungseinrichtung der Werkzeugmaschine 10 ist in FIG 1 besonders schematisch dargestellt und dort mit 16 bezeichnet. Bei der Messgröße handelt es sich beispielsweise um einen auch als Motorstrom bezeichneten elektrischen Strom, welcher durch den Antrieb fließt beziehungsweise mit welchem der Antrieb versorgt wird, um dadurch das Werkstück und das Werkzeug relativ zueinander zu bewegen. Alternativ oder zusätzlich kann die Messgröße eine elektrische Spannung umfassen, welche an dem Antrieb anliegt beziehungsweise mit welcher der Antrieb versorgt wird, um dadurch mittels des Antriebs das Werkzeug und das Werkstück relativ zueinander zu bewegen. Um den Motorstrom beziehungsweise die Spannung zu messen, umfasst die Erfassungseinrichtung 16 beispielsweise einen Strommesser. beispielsweise umfasst die auch als Messeinrichtung bezeichneten Erfassungseinrichtung 16 eine Messsoftware, welche durch die elektronische Recheneinrichtung 12 ausgeführt wird und die Messgröße erfasst und/oder in Anhängigkeit von der Messgröße bei einem zweiten Schritt S2 des Verfahrens wenigstens einen den Bearbeitungsprozess charakterisierenden Messwert in Abhängigkeit von der während des Bearbeitungsprozesses erfassten BG berechnet. Mit anderen Worten ist es bei dem zweiten Schritt S2 vorgesehen, dass, insbesondere mittels der elektronischen Recheneinrichtung 12, der genannte Messwert in Abhängigkeit von der erfassten Messgröße ermittelt, insbesondere berechnet, wird. Der Messwert wird beispielsweise durch Daten charakterisiert, welche auch als Maschinendaten oder Messdaten bezeichnet werden. Die Maschinendaten werden beispielsweise der elektronischen Recheneinrichtung 12 zugeführt, sodass die elektronische Recheneinrichtung 12 die Werkzeugmaschine 10 in Abhängigkeit von den Maschinendaten betreiben kann.

Bei einem dritten Schritt S3 des Verfahrens wird der ermittelte Messwert mit wenigstens einer in einer elektronischen Speichereinrichtung 18, insbesondere der elektronischen Recheneinrichtung 12, gespeicherten, mehrdimensionalen Referenzfunktion verglichen, wobei beispielsweise der Messwert mittels der elektronischen Recheneinrichtung 12 mit der Referenzfunktion verglichen wird. Die Referenzfunktion wird oder wurde anhand wenigstens eines zeitlich vor dem Bearbeitungsprozess mittels der Werkzeugmaschine 10 durchgeführten Referenzbearbeitungsprozesses ermittelt, wobei die Referenzfunktion den zum Bearbeiten wenigstens eines zweiten Werkstücks einer zweiten Charge durchgeführten Referenzbearbeitungsprozesses charakterisiert. Mit anderen Worten, im Rahmen des Referenzbearbeitungsprozesses wird beziehungsweise wurde ein zweites Werkstück einer zweiten Charge mittels der Werkzeugmaschine 10 bearbeitet, insbesondere mechanisch beziehungsweise spanend bearbeitet, wobei die mehrdimensionale Referenzfunktion den Referenzbearbeitungsprozesses charakterisiert. Insbesondere definiert oder beschreibt die Referenzfunktion eine gegenseitige Abhängigkeit von einfach auch als Parameter bezeichneten Prozessparametern, auf deren Basis die Werkzeugmaschine 10, insbesondere von der elektronischen Recheneinrichtung 12, während des Referenzbearbeitungsprozesses betrieben, insbesondere gesteuert oder geregelt, wurde, um während des Referenzbearbeitungsprozesses das zweite Werkstück der zweiten Charge zu bearbeiten.

Ferner ist es denkbar, dass zeitlich vor dem Bearbeitungsprozess wenigstens ein zweiter Referenzbearbeitungsprozesses durchgeführt wurde beziehungsweise wird, wobei der zweite Referenzbearbeitungsprozesses zeitlich vor oder nach dem ersten Referenzbearbeitungsprozesses durchgeführt wird. Anhand des zweiten Referenzbearbeitungsprozesses wird beziehungsweise wurde eine zweite mehrdimensionale Referenzfunktion ermittelt, welche den zweiten Referenzbearbeitungsprozesses charakterisiert. Bei dem zweiten Referenzbearbeitungsprozess wird beziehungsweise wurde mittels der Werkzeugmaschine 10 wenigstens ein drittes Werkstück einer dritten Charge bearbeitet. Insbesondere beschreibt die zweite Referenzfunktion eine gegenseitige Abhängigkeit der Prozessparameter, auf deren Basis die Werkzeugmaschine 10, insbesondere mittels der elektronischen Recheneinrichtung 12, während des zweiten Referenzbearbeitungsprozesses betrieben, insbesondere gesteuert oder geregelt wurde, beziehungsweise wird. Die mehrdimensionalen Referenzfunktionen weisen die gleiche Dimension und die insbesondere im Hinblick auf ihre Art gleichen Variablen beziehungsweise Prozessparameter auf, sodass die Prozessparameter, deren gegenseitige Abhängigkeit durch die erste Referenzfunktion beschrieben wird, die gleichen Prozessparameter wie die Prozessparameter sind, deren Abhängigkeit durch die zweite Referenzfunktion beschrieben ist, jedoch unterscheiden sich die Prozessparameter, deren gegenseitige Abhängigkeit durch die erste Referenzfunktion beschrieben ist, beispielsweise im Hinblick auf ihren jeweiligen Werte von den Prozessparametern, deren Abhängigkeit durch die zweite Referenzfunktion beschrieben ist. Dabei wird beispielsweise der Messwert mittels der elektronischen Recheneinrichtung 12 auch mit der zweiten Referenzfunktion verglichen. Dabei ist es insbesondere vorgesehen, dass das Vergleichen umfasst, dass mittels der elektronischen Recheneinrichtung eine Konvexkombination der mehrdimensionalen Referenzfunktionen durchgeführt wird, wodurch eine mehrdimensionale, den Messwert umfassende und den Bearbeitungsprozess charakterisierende Ist-Funktion ermittelt wird. Die Referenzfunktion und die Ist-Funktion weisen die gleichen Variablen beziehungsweise Prozessparameter und die gleiche Dimension auf. Bei den Prozessparametern kann es sich beispielsweise um einen Verschleiß des Werkzeugs, um einen Vorschub um eine Schnittgeschwindigkeit und/oder um eine Schnitttiefe handeln.

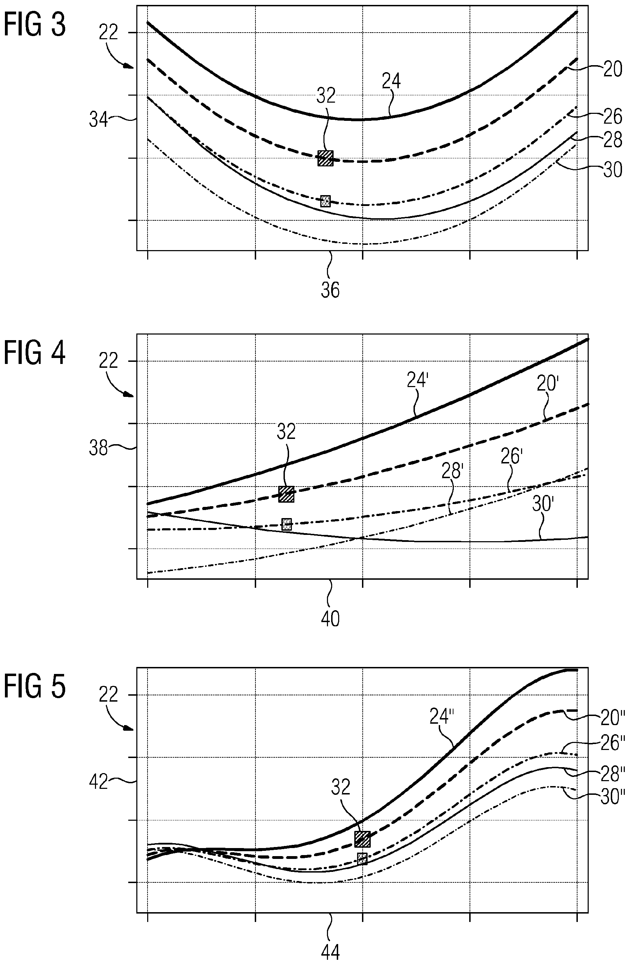

Anhand von FIG 3 bis 5 ist erkennbar, dass beispielsweise zumindest ein erster Teil der mehrdimensionalen Ist-Funktion durch einen ersten Funktionsgraph 20 visualisiert wird, indem der Funktionsgraph 20 auf einer auch als elektronischer Bildschirm bezeichneten elektronischen Anzeige 22, insbesondere der Werkzeugmaschine 10, angezeigt wird. Außerdem werden zumindest jeweilige Teile der ersten und zweiten Referenzfunktion sowie einer dritten und vierten Referenzfunktion durch jeweilige Funktionsgraphen 24, 26, 28 und 30 visualisiert, indem die Funktionsgraphen 24, 26, 28 und 30 auf der Anzeige 22 angezeigt werden. Dabei werden die Funktionsgraph 20, 24, 26, 28 und 30 gleichzeitig auf der Anzeige 22 angezeigt. Außerdem ist der zuvor genannte Messwert in FIG 3 erkennbar und dort mit 32 bezeichnet. Insbesondere kann der Messwert 32 ein Messpunkt sein. Besonders gut aus FIG 3 ist erkennbar, dass die Ist-Funktion eine Konvexkombination der Referenzfunktionen ist und durch diese Konvexkombination approximiert wurde beziehungsweise wird.

FIG 4 veranschaulicht, dass alternativ oder zusätzlich die Ist-Funktion und die Referenzfunktionen dadurch visualisiert werden können, dass jeweilige Funktionsgraph 20', 24', 26', 28' und 30' zumindest an jeweiligen Teilen der Ist-Funktion und der Referenzfunktionen gleichzeitig auf der Anzeige 22 angezeigt werden. Dies ist auch aus FIG 5 erkennbar, welche veranschaulicht, dass alternativ oder zusätzlich auf der Anzeige 22 weitere Funktionsgraphen 24", 26", 28" und 30" gleichzeitig angezeigt werden können, welche zumindest jeweilige Teile der Ist-Funktion und der Referenzfunktion veranschaulichen. Dabei veranschaulicht FIG 3 beispielsweise eine gegenseitige Abhängigkeit eines ersten der Prozessparameter und eines zweiten der Prozessparameter, wobei der erste Prozessparameter mit 34 bezeichnet und auf der Ordinate aufgetragen ist, wobei der zweite Prozessparameter mit 36 bezeichnet und auf der Abszisse aufgetragen ist. Der erste Prozessparameter ist beispielsweise der Motorstrom und der zweite Prozessparameter ist beispielsweise die Schnittgeschwindigkeit. Demgegenüber veranschaulicht FIG 4 eine gegenseitige Abhängigkeit eines dritten der Prozessparameter und eines vierten der Prozessparameter, wobei der dritte Prozessparameter mit 38 und der vierte Prozessparameter mit 40 bezeichnet sind. Der dritte Prozessparameter ist beispielsweise auf der Ordinate aufgetragen und der Motorstrom, wobei der vierte Prozessparameter beispielsweise der Vorschub ist. Außerdem veranschaulicht FIG 5 eine gegenseitige Abhängigkeit eines fünften der Prozessparameter und eines sechsten der Prozessparameter, wobei der fünfte Prozessparameter mit 42 und der sechste Prozessparameter mit 44 bezeichnet sind. Der fünfte Prozessparameter ist beispielsweise der Motorstrom, während der sechste Prozessparameter beispielsweise der Werkzeugverschleiß ist. Beispielsweise durch variieren eines der Prozessparameter, insbesondere durch variieren eines Werts eines der Prozessparameter, wird beispielsweise wenigstens ein anderer der Prozessparameter, insbesondere ein Wert eines anderen der Prozessparameter, beeinflusst, da die Prozessparameter in gegenseitiger Abhängigkeit stehen. Diese gegenseitige Abhängigkeit der Prozessparameter wird durch die Ist-Funktion beziehungsweise durch die jeweilige Referenzfunktion beschrieben.

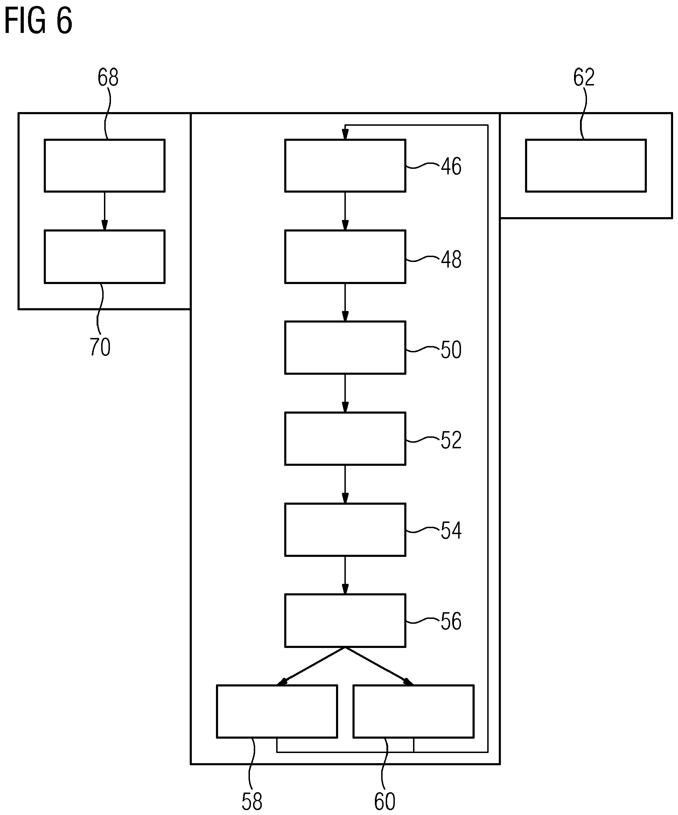

Schließlich zeigt FIG 6 Blockschaltbilder zur weiteren Veranschaulichung des Verfahrens. Bei einem Block 46 werden beispielsweise die gepufferten und auch als Achswerte bezeichneten Messwerte beziehungsweise Maschinendaten ausgelesen. Bei einem Block 48 wird beispielsweise anhand der ausgelesenen Achswerte und anhand einer Eingriffshistorie der Werkzeugverschleiß berechnet. Bei einem Block 50 werden beispielsweise die Messwerte gefiltert. Bei einem Block 52 wird die Konvexkombination gebildet, um die Ist-Funktion und somit die aktuelle, erste Charge, insbesondere deren Zerspanverhalten, zu approximieren.

Bei einem Block 54 erfolgt eine Visualisierung, in deren Rahmen beispielsweise die genannten Funktionsgraphen auf der Anzeige 22 angezeigt werden. Bei einem Block 56 erfolgt beispielsweise eine Optimierung der Variablen und somit einstellbaren Prozessparameter, insbesondere derart, dass beispielsweise mittels der elektronischen Recheneinrichtung 12 wenigstens ein erster Wert wenigstens eines, mittels der Werkzeugmaschine 10 durchzuführenden Bearbeitungsprozesse beeinflussenden, ersten der Prozessparameter derart berechnet wird, dass wenigstens ein zweiter Wert eines zweiten der Prozessparameter ein vorgebbares oder vorgegebenes Kriterium erfüllt und dabei beispielsweise einem Sollwert entspricht und/oder einen Schwellenwert überschreitet und/oder einen Grenzwert unterschreitet.

Bei einem Block 58 erfolgt eine automatische Adaption der Prozessparameter, sodass beispielsweise der berechnete erste Wert mittels der elektronischen Recheneinrichtung 12 automatisch eingestellt wird. Alternativ oder zusätzlich erfolgt bei einem Block 60 eine manuelle Adaption der Prozessparameter, indem beispielsweise der berechnete erste Wert oder ein davon unterschiedlicher weiterer Wert des ersten Prozessparameters durch eine die Werkzeugmaschine bedienende Person eingestellt wird.

Die Blöcke 46, 48, 50, 52, 54, 56, 58 und 60 veranschaulichen somit einen Ablauf an der Werkzeugmaschine 10. Ein Block 62 veranschaulicht eine nachgelagerte Verarbeitung der im Rahmen des Verfahrens ermittelten beziehungsweise berechneten Daten, welche auch als Prozessdaten bezeichnet werden. Diese Prozessdaten sind in FIG 1 besonders schematisch dargestellt und mit 64 bezeichnet. Beispielsweise werden die Prozessdaten 64 in eine auch als Datencloud oder Cloud bezeichnete und bezüglich der Werkzeugmaschine 10 externe Datenwolke 66 übertragen. Insbesondere umfassen die Prozessdaten zumindest eine der Referenzfunktionen und/oder die Ist-Funktion, sodass beispielsweise die Prozessdaten 64 die erste Charge und/oder die zweite Charge und/oder die dritte Charge charakterisieren. Blöcke 68 und 70 veranschaulichen eine Konfiguration. Bei dem Block 68 wird ein statistisches Modell an die Werkzeugmaschine 10 angepasst. Das statistische Modell nutzt dabei die Referenzfunktionen und somit die durch die Referenzfunktionen gebildete Funktionenschar. Bei einem Block 70 wird das statistische Modell an das Werkzeug angepasst. Somit berücksichtigt das statistische Modell beispielsweise das Werkzeug und die Werkzeugmaschine 10, insbesondere maschinenspezifische Varianzen.

Aus FIG 1 ist schließlich erkennbar, dass die Prozessdaten 64 aus der Datenwolke 66 abgerufen und beispielsweise für eine Prozessoptimierung 72 verwendet werden können, wobei aus der Prozessoptimierung 72 gewonnene Erkenntnisse in die Konstruktionsdaten 14 beziehungsweise in weitere Konstruktionsdaten einfließen können.

**Patentansprüche**

1. Verfahren zum Betreiben einer Werkzeugmaschine (12), mit den Schritten:

   - während eines Bearbeitungsprozesses, bei welchem mittels der Werkzeugmaschine wenigstens (12) ein erstes Werkstück einer ersten Charge bearbeitet wird: Erfassen wenigstens einer Messgröße mittels einer Erfassungseinrichtung (16) der Werkzeugmaschine (12; Schritt S1);
   - Ermitteln wenigstens eines den Bearbeitungsprozess charakterisierenden Messwerts (32) in Abhängigkeit von der während des Bearbeitungsprozesses erfassten Messgröße mittels einer elektronischen Recheneinrichtung (12; Schritt S2); und
   - Vergleichen des ermittelten Messwerts mit wenigstens einer zeitlich vor dem Bearbeitungsprozess anhand wenigstens eines zeitlich vor dem Bearbeitungsprozess mittels der Werkzeugmaschine (10) und/oder mittels einer weiteren Werkzeugmaschine durchgeführten Referenzbearbeitungsprozesses ermittelten und in einer elektronischen Speichereinrichtung (18) gespeicherten Referenzfunktion, welche den zum Bearbeiten wenigstens eines zweiten Werkstücks einer zweiten Charge durchgeführten Referenzbearbeitungsprozess charakterisiert (Schritt S3).

2. Verfahren nach Anspruch 1,
   wobei wenigstens ein Parameter, welcher mittels der Werkzeugmaschine (12) durchzuführende Bearbeitungsprozesse beeinflusst, in Abhängigkeit von dem Vergleich eingestellt wird.

3. Verfahren nach Anspruch 1 oder 2,
   wobei der ermittelte Messwert mit wenigstens einer zeitlich vor dem Bearbeitungsprozess anhand wenigstens eines zeitlich vor dem Bearbeitungsprozess mittels der Werkzeugmaschine (12) und/oder mittels einer weiteren Werkzeugmaschine durchgeführten zweiten Referenzbearbeitungsprozesses ermittelten und in der elektronischen Speichereinrichtung (18) gespeicherten zweiten Referenzfunktion verglichen wird, welche den zum Bearbeiten wenigstens eines dritten Werkstücks einer dritten Charge durchgeführten zweiten Referenzbearbeitungsprozess charakterisiert.

4. Verfahren nach Anspruch 3,
   wobei das Vergleichen umfasst, dass mittels der elektronischen Recheneinrichtung (12) eine Kombination, insbesondere eine Linearkombination und vorzugsweise eine Konvexkombination, der Referenzfunktionen durchgeführt wird, wodurch eine, den Messwert (32) umfassende und den Bearbeitungsprozess charakterisierende Ist-Funktion ermittelt wird.

5. Verfahren nach Anspruch 4,
   wobei zumindest ein Teil der Ist-Funktion durch zumindest einen Funktionsgraphen (20, 20', 20") visualisiert wird, indem der Funktionsgraph (20, 20', 20") auf einer elektronischen Anzeige (22) angezeigt wird.

6. Verfahren nach Anspruch 4 oder 5,
   wobei mittels der elektronischen Recheneinrichtung (12) wenigstens ein erster Wert wenigstens eines ersten Parameters, welcher mittels der Werkzeugmaschine (12) durchzuführende Bearbeitungsprozesse beeinflusst, derart berechnet wird, dass wenigstens ein zweiter Wert wenigstens eines zweiten Parameters, dessen Abhängigkeit von dem ersten Parameter durch die Ist-Funktion beschrieben ist, wenigstens ein vorgebbares oder vorgegebenes Kriterium erfüllt.

7. Verfahren nach Anspruch 6,
   wobei der wenigstens eine erste Wert des wenigstens einen ersten Parameters mittels der elektronischen Recheneinrichtung (12) automatisch eingestellt wird.

8. Verfahren nach Anspruch 6,
   wobei der wenigstens eine erste Wert des wenigstens einen ersten Parameters in Abhängigkeit von wenigstens einer erfassten und von einer Person bewirkten Eingabe eingestellt wird.

9. Verfahren nach einem der Ansprüche 6 bis 8,
   wobei das wenigstens eine Kriterium in Abhängigkeit von wenigstens einer erfassten und von einer Person bewirkten Eingabe eingestellt und dadurch vorgegeben wird.

10. Verfahren nach einem der vorhergehenden Ansprüche,
    wobei zeitlich vor dem Bearbeitungsprozess der Referenzbearbeitungsprozess durchgeführt wird, bei welchem das zweite Werkstück mittels der Werkzeugmaschine (12) bearbeitet wird, wobei während des Referenzbearbeitungsprozesses die wenigstens eine Messgröße mittels der Erfassungseinrichtung (16) der Werkzeugmaschine (12) erfasst wird, wobei mittels der elektronischen Recheneinrichtung (12) wenigstens ein den Referenzbearbeitungsprozess charakterisierender Referenzmesswert in Abhängigkeit von der während des Referenzbearbeitungsprozesses erfassten Messgröße ermittelt wird, und wobei in Abhängigkeit von dem Referenzmesswert die Referenzfunktion ermittelt wird.

11. Verfahren nach einem der vorhergehenden Ansprüche,
wobei die Referenzfunktion und/oder die Ist-Funktion und/oder der Messwert (32) und/oder der Referenzmesswert und/oder der wenigstens eine erste Wert des wenigstens einen ersten Parameters bereitgestellt und in eine bezüglich der Werkzeugmaschine (12) externe Datenwolke (66) geladen wird.

12. Werkzeugmaschine (12) zum Bearbeiten von Werkstücken, wobei die Werkzeugmaschine (12) zum Durchführen eines Verfahrens nach einem der vorhergehenden Ansprüche ausgebildet ist.

FIG 1

FIG 2

EP 3 715 978 A1

FIG 3

22

34

32

24

20

26

28

30

36

FIG 4

22

38

24'

20'

32

28'

26'

30'

40

FIG 5

22

42

24"

20"

26"

32

28"

30"

44

FIG 6

**Europäisches Patentamt**
**European Patent Office**
**Office européen des brevets**

# EUROPÄISCHER RECHERCHENBERICHT

Nummer der Anmeldung

EP 19 16 5248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 719 586 A (MOYER JOHN A [US] ET AL) 12. Januar 1988 (1988-01-12) * das ganze Dokument * | 1-12 | INV. G05B19/404 |
| A | DE 10 2015 209917 A1 (ZAHNRADFABRIK FRIEDRICHSHAFEN [DE]) 1. Dezember 2016 (2016-12-01) * Absätze [0013], [0017], [0031] - [0034] * | 1-12 | |
| A | DE 102 41 742 A1 (ALSTOM SWITZERLAND LTD [CH]) 18. März 2004 (2004-03-18) * Absätze [0019] - [0025] * | 1,12 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 5. September 2019 | Salvador, Didier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 3 715 978 A1**

## ANHANG ZUM EUROPÄISCHEN RECHERCHENBERICHT
## ÜBER DIE EUROPÄISCHE PATENTANMELDUNG NR.

EP 19 16 5248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2019

| Im Recherchenbericht angeführtes Patentdokument | Datum der Veröffentlichung | Mitglied(er) der Patentfamilie | Datum der Veröffentlichung |
|---|---|---|---|
| US 4719586 A | 12-01-1988 | KEINE | |
| DE 102015209917 A1 | 01-12-2016 | KEINE | |
| DE 10241742 A1 | 18-03-2004 | DE 10241742 A1<br>GB 2406812 A<br>JP 4593893 B2<br>JP 2004098279 A<br>US 2004049312 A1 | 18-03-2004<br>13-04-2005<br>08-12-2010<br>02-04-2004<br>11-03-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2012153157 A2
- DE 102017000471 A1
- DE 102006006273 A1